# EUROPEAN PATENT APPLICATION

(11) **EP 3 312 784 A1**
(43) Date of publication of application: **25.04.2018**
(21) Application number: 17185352.6
(22) Date of filing: 08.08.2017
(51) Int. Cl.: G06Q 10/06, G05D 1/00

(54) **TASK SHARING AND SCHEDULING INTERFACE**

(30) Priority: 24.10.2016 US 201662412019 P
(71) Applicant: Sikorsky Aircraft Corporation, Stratford, CT 06615 (US)
(72) Inventor: SAHAY, Prateek, Shelton, CT Connecticut 06484 (US); UNNIKRISHNAN, Suraj, Sandy Hook, CT Connecticut 06482 (US); KANNAN, Suresh, Burlington, CT Connecticut 06013 (US)
(74) Representative: Schmitt-Nilson Schraud Waibel Wohlfrom Patentanwälte Partnerschaft mbB

(57) **Abstract**

A processing system for displaying a task sharing and scheduling interface includes: at least one assist agent to perform tasks; an autonomy management module to decompose a mission into the tasks and to allocate the tasks between at least one user and at least one assist agent; a display to display the task sharing and scheduling interface to the at least one user on a display and to receive input from the at least one user, wherein the interface comprises an agent region and a user region, wherein the agent region comprises indicia of tasks allocated to the at least one assist agent, wherein the user region comprises indicia of tasks allocated to the at least one user, and wherein the at least one assist agent performs at least one of the tasks allocated to the at least one assist agent.

## Description

This invention was made with government support under HR0011-15-9-0004 awarded by the Defense Advanced Research Projects Agency (DARPA). The government has certain rights in the invention.

The subject matter disclosed herein relates to task sharing and scheduling, and more particularly, to a task sharing and scheduling interface for autonomous systems and agents.

Autonomous systems are implemented in vehicles, such as air vehicles, to enable the vehicles to operate with a reduced number of crew or operators. Autonomous systems may include a vehicle autonomy management system that decomposes a mission into tasks and allocates them between flight assist agents (e.g., a flight control system) and the flight crew (e.g., a pilot or other crew).

According to one embodiment of the invention, a processing system for displaying a task sharing and scheduling interface comprises: at least one assist agent to perform tasks; an autonomy management module to decompose a mission into the tasks and to allocate the tasks between at least one user and at least one assist agent; a display to display the task sharing and scheduling interface to the at least one user on a display and to receive input from the at least one user, wherein the interface comprises an agent region and a user region, wherein the agent region comprises indicia of tasks allocated to the at least one assist agent, wherein the user region comprises indicia of tasks allocated to the at least one user, and wherein the at least one assist agent performs at least one of the tasks allocated to the at least one assist agent.

In addition to one or more of the features described above, or as an alternative, the input causes the autonomy management engine to reallocate a selected task from the at least one user to the at least one assist agent, and the agent region and the user region are updated to comprise indicia of the selected task.

In addition to one or more of the features described above, or as an alternative, the input causes the autonomy management engine to reallocate a selected task from the at least one user to another user, and the agent region and the user region are updated to comprise indicia of the selected task.

In addition to one or more of the features described above, or as an alternative, further embodiments the input causes the autonomy management engine to reallocate a selected task from the at least one assist agent to the at least one user, and the agent region and the user region are updated to comprise indicia of the selected task.

In addition to one or more of the features described above, or as an alternative, the mission is a flight mission and the processing system is located on an aircraft.

In addition to one or more of the features described above, or as an alternative, the indicia are colors.

In addition to one or more of the features described above, or as an alternative, the indicia are shapes.

In addition to one or more of the features described above, or as an alternative, the assist agent is an autopilot system.

According to another embodiment, a computer-implemented method for task sharing and scheduling, the method comprises: receiving, by a processing device, a plurality of tasks from an autonomy management engine, wherein each of the plurality of tasks is assigned to one of an assist agent, a first crew member, and a second crew member; displaying, on a first display and on a second display, a task sharing and scheduling interface to the first crew member and to the second crew member respectively, wherein the interface comprises an agent region, a first user region, and a second user region, wherein the agent region comprises indicia of tasks allocated to the at least one assist agent, wherein the first user region comprises indicia of tasks allocated to the first crew member, and wherein the second user region comprises indicia of tasks allocated to the second crew member; and performing, by the assist agent, at least one task allocated to the assist agent.

In addition to one or more of the features described above, or as an alternative, further embodiments comprise receiving, by the processing device, a change to at least one of the plurality of tasks from the first crew member via one of the first display and the second display, and displaying, on the first display and on the second display, the plurality of tasks, including the change to the at least one of the plurality of tasks, to the first crew member and to the second crew member respectively.

In addition to one or more of the features described above, or as an alternative, the change to the at least one of the plurality of task comprises an assignment change from one of the first crew member and the second crew member to the assist agent.

In addition to one or more of the features described above, or as an alternative, the change to the at least one of the plurality of task comprises a changed task.

In addition to one or more of the features described above, or as an alternative, further embodiments comprise performing, by the assist agent, the changed task.

In addition to one or more of the features described above, or as an alternative, the assist agent is an automatic pilot system.

In addition to one or more of the features described above, or as an alternative, the change to the at least one of the plurality of task comprises a changed task, and further embodiments comprise transmitting, by the processing device, the changed task to the assist agent, and performing, by the assist agent, the changed task.

In addition to one or more of the features described above, or as an alternative, further embodiments comprise receiving, by the processing device, feedback from the assist agent upon completion of the performing the at least one task allocated to the assist agent.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a perspective view of an example of a rotary wing aircraft according to aspects of the present disclosure;
FIG. 2 illustrates a block diagram of a flight control system of an aircraft according to aspects of the present disclosure;
FIG. 3 illustrates a block diagram of a flight control system of an aircraft according to aspects of the present disclosure;
FIG. 4 illustrates a block diagram of a task sharing and scheduling interface according to aspects of the present disclosure;
FIG. 5 illustrates a block diagram of a task sharing and scheduling interface according to aspects of the present disclosure;
FIG. 6 illustrates a block diagram of a task sharing and scheduling interface according to aspects of the present disclosure; and
FIG. 7 illustrates a flow diagram of a method for task sharing and scheduling according to aspects of the present disclosure.

The detailed description explains embodiments of the invention, together with advantages and features, by way of example with reference to the drawings.

Methodologies and concepts driving the design of an interface for visualization of task allocation between agents and crew is important for the crew to develop trust in autonomous systems and for the adoption of autonomous systems into the future of mixed human machine autonomy. The present techniques facilitate modifying/adjusting task allocation and also monitoring tasks. A simple interface is not only useful for the human users to develop trust in the autonomous system but is also useful so that future reduced crew flight operations can be managed easily.

The present disclosure provides the design concepts and methods for representation, display, and visualization of a mission into its representative set of mission functional task elements. According to aspects of the present disclosure, the proposed interface is designed for an operator to see how tasks for a particular mission (e.g., a cargo drop mission, a bombing mission, etc.) are allocated between the human agents (i.e., the flight crew) and flight assist agents (e.g., a flight control system). The present techniques provide for the representation of tasks in a user interface as well how tasks can be re-arranged or adjusted, such as using a touch interface. The proposed interface may notify the crew of upcoming tasks and enable the crew to monitor task completion status, assess mission workload throughout the mission to inject "what-if" scenarios, recap what occurred, and predict what may happen in future.

In examples, the present techniques provide the crew with a single, unified interface of all autonomous systems and agents available on the aircraft. The proposed interface works in conjunction with a vehicle autonomy management system that support different vehicle (e.g., aircraft, trucks, tanks, etc.) missions. A vehicle autonomy management system decomposes a mission into discrete task elements that can be allocated between crew and flight assist agents. The design interface proposed in this disclosure presents unique methods for representation of task allocation on a user display such as tablet, multi-functional display, or an augmented or mixed reality world. The proposed interface supports reallocation/adjustment of allocation, task monitoring, workload monitoring, and notification of upcoming tasks. The present techniques operate in conjunction with other interfaces such as a primary flight display or cockpit display instruments. The interface can also be used for larger missions involving multiple autonomous agents controlled by a single pilot to allocate tasks between the multiple autonomous agents.

Example embodiments of the disclosure include or yield various technical features, technical effects, and/or improvements to technology. For instance, example embodiments of the disclosure provide the technical effect of decomposing a mission into discrete task elements and allocating them between assist agents and users. As a result, user error is reduced by offloading some user tasks to assist agents. The present techniques improve safety and operational efficiency, such as of an aircraft, by allocating some tasks to assist agents and by presenting the user(s) with a simplified, interactive interface. Moreover, the present techniques achieve the technical effect of enabling an assist agent to perform a task that is reallocated by a user to the agent. As a result of the aforementioned technical features and technical effects, example embodiments of the disclosure constitute an improvement to existing mission and task allocation and to vehicles, such as aircraft. It should be appreciated that the above examples of technical features, technical effects, and improvements to technology of example embodiments of the disclosure are merely illustrative and not exhaustive.

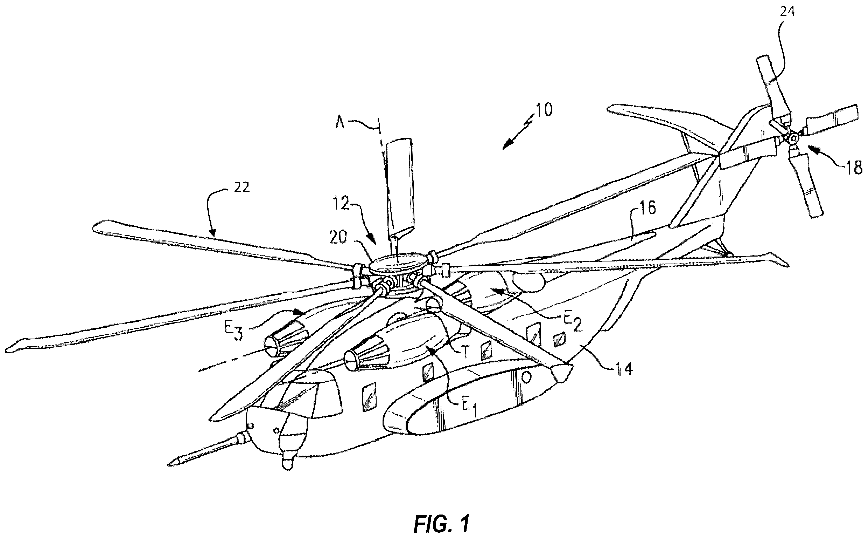

FIG. 1 schematically illustrates an example of a rotary wing aircraft 10 having a main rotor assembly 12. The aircraft 10 includes an airframe 14 having an extending tail 16 which mounts a tail rotor system 18, such as an anti-torque system, a translational thrust system, a pusher propeller, a rotor propulsion system, and the like. The main rotor assembly 12 includes a plurality of rotor blade assemblies 22 mounted to a rotor hub 20. The main rotor assembly 12 is driven about an axis of rotation A through a main gearbox (illustrated schematically at T) by one or more engines E. Although a particular helicopter configuration is illustrated and described in the disclosed embodiment, other configurations and/or machines, such as high speed compound rotary wing aircraft with supplemental translational thrust systems, dual contra-rotating, coaxial rotor system aircraft, tilt-rotors and tilt-wing aircraft, and fixed wing aircraft, will also benefit from embodiments of the invention.

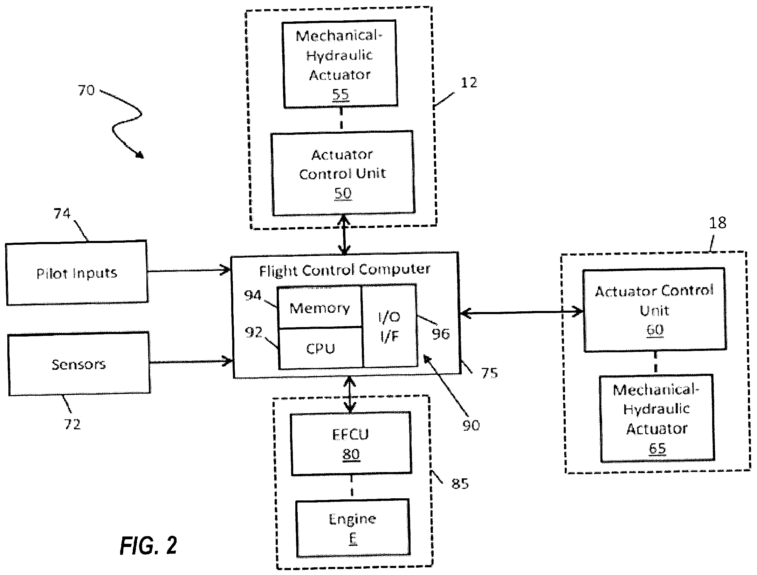

Portions of the aircraft 10, such as the main rotor system 12 and the tail rotor system 18 for example, are driven by a flight control system 70 illustrated in FIG. 2. In one embodiment, the flight control system 70 is a fly-by-wire (FBW) control system. In a FBW control system, there is no direct mechanical coupling between a pilot's controls and movable components or control surfaces, such as rotor blade assemblies 20 or propeller blades 24 for example, of the aircraft 10 of FIG. 1. Instead of using mechanical linkages, a FBW control system includes a plurality of sensors 72 which can sense the position of controlled elements and generate electrical signals proportional to the sensed position. The sensors 72 may also be used directly and indirectly to provide a variety of aircraft state data to a flight control computer (FCC) 75. The FCC 75 may also receive pilot inputs 74 as control commands to control the lift, propulsive thrust, yaw, pitch, and roll forces and moments of the various control surfaces of the aircraft 10.

In response to inputs from the sensors 72 and pilot inputs 74, the FCC 75 transmits signals to various subsystems of the aircraft 10, such as the main rotor system 12 and the tail rotor system 18. The FCC 75 can use reference values in the pilot inputs 74 for feed forward control to quickly respond to changes in the reference values and can perform feedback control to reject disturbances detected via the sensors 72. Pilot inputs 74 can be in the form of stick commands and /or beeper commands to set and incrementally adjust reference values for controllers. The pilot inputs 74 need not be directly provided by a human pilot, but may be driven by an automatic pilot, a remote control, a navigation-based control, or one or more outer control loops configured to produce one or more values used to pilot the aircraft 10.

The main rotor system 12 can include an actuator control unit 50 configured to receive commands from the FCC 75 to control one or more actuators 55, such as a mechanical-hydraulic actuator, for the rotor blade assemblies 20 of FIGS. 1 and 2. In an embodiment, pilot inputs 74 including cyclic and /or collective commands may result in the actuator control unit 50 driving the one or more actuators 55 to adjust a swashplate assembly to control the rotor blade assemblies 20 of FIG. 1. Alternatively, the FCC 75 can directly control the one or more actuators 55, and the actuator control unit 50 can be omitted.

The tail rotor system 18 can include an actuator control unit 60 configured to receive commands from the FCC 75 to control one or more actuators 65, such as a mechanical-hydraulic actuator, associated with one or more propeller blades 24. In an embodiment, pilot inputs 74 include a propeller pitch command for the actuator control unit 60 to drive the one or more actuators 65 for controlling the propeller blades FIG. 1. Alternatively, the FCC 75 can directly control the one or more actuators 65, and the actuator control unit 60 can be omitted.

The FCC 75 can also interface with an engine control system 85 including one or more electronic engine control units (EECUs) 80 to control the engines E. Each EECU 80 may be a digital electronic control unit such as Full Authority Digital Engine Control (FADEC) electronically interconnected to a corresponding engine E. Each engine E may include one or more instances of the EECU 80 to control engine output and performance. Engines E may be commanded in response to the pilot inputs 74, such as a throttle command.

Rather than simply passing pilot inputs 74 through to various control units 50, 60, and 80, the FCC 75 includes a processing system 90 that applies models and control laws to augment commands. The processing system 90 includes processing circuitry 92, memory 94, and an input/output (I/O) interface 96. The processing circuitry 92 can be any type or combination of computer processors, such as a microprocessor, microcontroller, digital signal processor, application specific integrated circuit, programmable logic device, and /or field programmable gate array, and is generally referred to as central processing unit (CPU) 92. The memory 94 can include volatile and non-volatile memory, such as random access memory (RAM), read only memory (ROM), or other electronic, optical, magnetic, or any other computer readable storage medium onto which data and control logic as described herein are stored. Therefore, the memory 94 is a tangible storage medium where instructions executable by the processing circuitry 92 are embodied in a non-transitory form. The I/O interface 96 can include a variety of input interfaces, output interfaces, communication interfaces and support circuitry to acquire data from the sensors 72, pilot inputs 74, and other sources (not depicted) and may communicate with the control units 50, 60, 80, and other subsystems (not depicted).

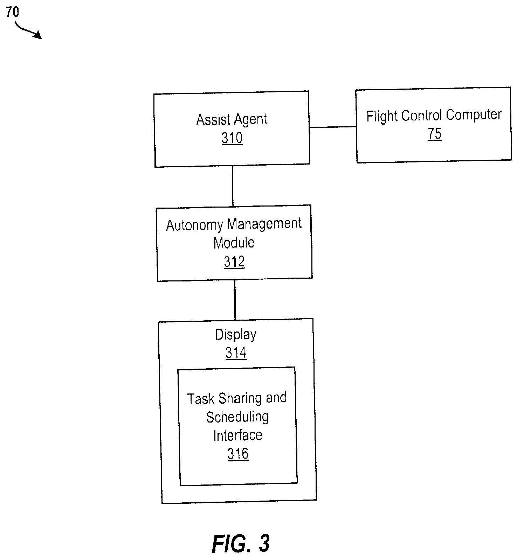

Turning now to FIG. 3, the flight control system 70 includes an assist agent 310, an autonomy management module 312, and a display 314 to display a task sharing and scheduling interface 316 according to aspects of the present disclosure. The assist agent 310 performs tasks allocated to the assist agent. In examples, the assist agent 310 may be an automatic pilot system, a remote control, a navigation-based control, one or more outer control loops configured to produce one or more values used to pilot the aircraft 10, or another autonomous system for performing tasks of the mission.

The autonomy management module 312 decomposes a mission into discrete tasks and allocates the tasks between a user and the assist agent 310. For example, in a flight mission, a heading and altitude change task may be allocated to the assist agent 310 and a cargo drop task may be allocated to a user. In this example, the assist agent 310 performs the heading and altitude change and the user performs the cargo drop task. It should be appreciated that other types of tasks and missions are possible. It should also be appreciated that tasks may have sub tasks. For example, the task of dropping cargo allocated to the user may include subtasks open cargo bay door, detach cargo restraints, release cargo, etc. Each of these subtasks may be allocated to users and/or assist agents by the autonomy management module 312.

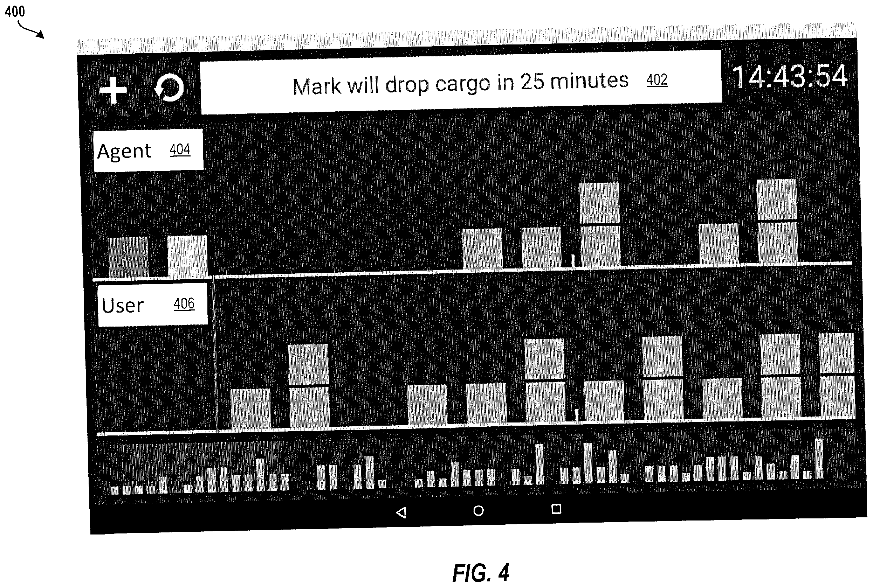

The display 314 displays the task sharing and scheduling interface 316 to a user or users. In one example of a task sharing and scheduling interface 316 as illustrated in FIG. 4, the interface 400 includes an agent region 404 and a user region 406. The agent region 404 includes indicia of tasks allocated to the assist agent 310 and the user region 406 includes indicia of tasks allocated to the user. The interface 400 also displays a message indicator region 402 that includes a message related to a task (i.e., a task selected by a user, a next task, etc.). In the example of FIG. 4, the message indicator region 402 indicates that "Mark will drop cargo in 25 minutes."

The boxes illustrated in each of the agent region 404 and the user region 406 of FIG. 4 represent the tasks from the decomposed mission. In the example of FIG. 4, the tasks are shown along a timeline from left to right, with the right most tasks being later in time than the left most tasks. The current time may be indicated with a vertical line as shown in FIG. 4.

Tasks may have an indicium associated therewith that indicates information about the task. For example, indicia of colors may be used to indicate which tasks are assigned to which agent/user (e.g., blue tasks are assigned to an assist agent and green tasks are assigned to a pilot). In another example, indicia of colors may be used to indicate a status of the tasks (e.g., red tasks are incomplete, green tasks are complete, and blue tasks are pending). Other indicia may also be used, such as shapes, shading, line style, line weight, symbols, text, etc.

It should also be appreciated that multiple tasks may be scheduled to be executed simultaneously or concurrently, as indicated my multiple boxes occurring at the same point in time. In some cases, multiple boxes for simultaneous or concurrent execution may be assigned to the same agent/user and/or to different agents/users.

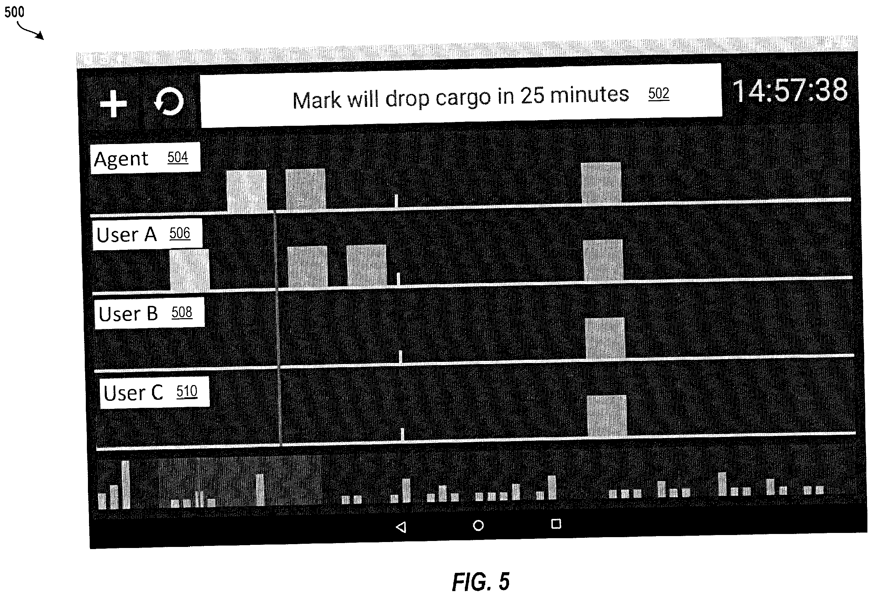

In another example, shown in FIG. 5, a task sharing and scheduling interface 500 includes additional user regions (e.g., user A region 506, user B region 508, and user C region 510). It should be appreciated that additional agent regions may be included in other examples. The interface 500 also includes a message indicator region 502 that displays a message related to a task.

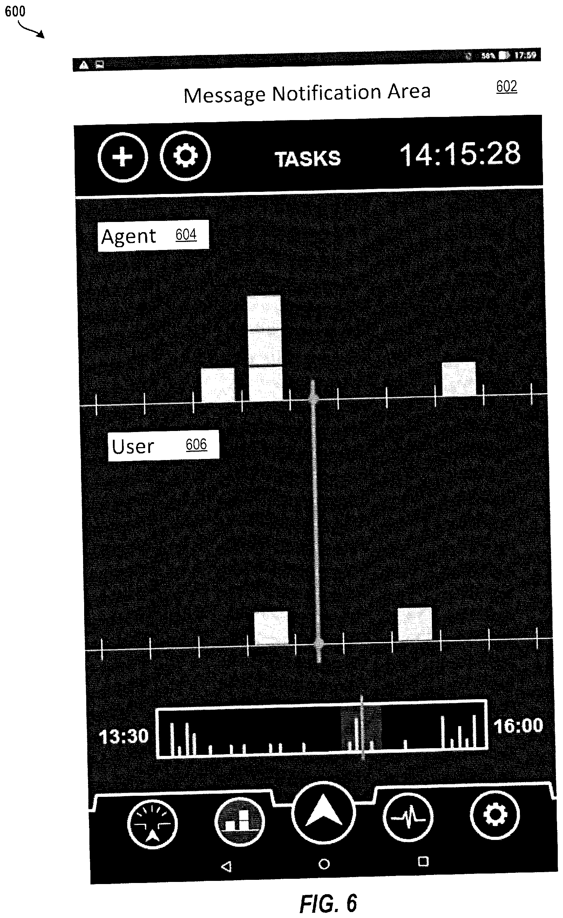

In yet another example, shown in FIG. 6, a task sharing and scheduling interface 600 includes an agent region 604 and a user region 606. The interface 500 also includes a message indicator region 502 that displays a message related to a task. The example of FIG. 6 may be useful, for example, to a pilot, because the interface 600 includes additional information such as estimated time of arrival, heading, altitude, etc.

The interfaces 400, 500, and 600 may include additional options, such as the option to add a task, delete a task, mark a task complete, reassign a task, and the like. For example, a user may select a task by touching the task with his finger. The user may then mark the task as complete or reassign the task to an agent or another user.

The display 314 also may receive input from a user. For example, the display 314 may be a touch-sensitive display such that a user may provide input directly to the display 314. In another example, the user may use an input device (e.g., a mouse, a keyboard, a joystick, etc.) to provide input to the display 314. In examples, the input received from the user causes the autonomy management engine to reallocate a selected task. For example, the selected task may be reallocated from a user to the assist agent 310, from the assist agent 310 to the user, from the assist agent 310 to another user, from the user to another user, etc.

In other examples, the user may interact with the display 314 to modify views and information presented on the display. For example, the user may scroll the display, use drop-and-drag to reposition/reallocate tasks, select a task for reallocation, select a task for additional details, and the like.

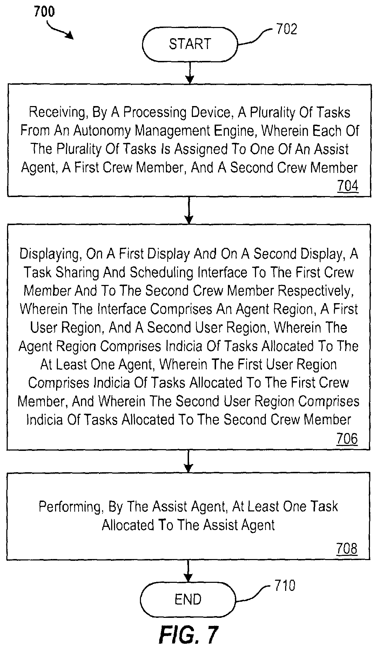

FIG. 7 illustrates a flow diagram of a method 700 for task handling and scheduling according to examples of the present disclosure. The method 700 may be performed, for example, by the flight control system 70 of FIG. 2. The method 200 starts at block 702 and continues to block 704.

At block 704, the method 700 includes receiving, by a processing device, a plurality of tasks from an autonomy management engine. Each of the plurality of tasks is assigned to one of an assist agent, a first crew member, and a second crew member. In some examples, the assist agent is an automatic pilot system or other autonomous system for performing tasks.

At block 706, the method 700 includes displaying, on a first display and on a second display, a task sharing and scheduling interface to the first crew member and to the second crew member respectively. The interface includes an agent region, a first user region, and a second user region. The agent region includes indicia of tasks allocated to the at least one assist agent, the first user region includes indicia of tasks allocated to the first crew member, and the second user region includes indicia of tasks allocated to the second crew member.

At block 708, the method 700 includes performing, by the assist agent, at least one task allocated to the assist agent. The method 700 continues to block 710 and ends.

Additional processes also may be included. For example, the method 700 may include receiving, by the processing device, a change to at least one of the plurality of tasks from the first crew member via one of the first display and the second display. The method 700 may further include displaying, on the first display and on the second display, the plurality of tasks, including the change to the at least one of the plurality of tasks, to the first crew member and to the second crew member respectively. The changed task may then be performed by the assist agent.

It should be understood that the processes depicted in FIG. 7 represent illustrations, and that other processes may be added or existing processes may be removed, modified, or rearranged without departing from the scope and spirit of the present disclosure.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A processing system for displaying a task sharing and scheduling interface, the system comprising:
at least one assist agent to perform tasks;
an autonomy management module to decompose a mission into the tasks and to allocate the tasks between at least one user and at least one assist agent;
a display to display the task sharing and scheduling interface to the at least one user on a display and to receive input from the at least one user, wherein the interface comprises an agent region and a user region, wherein the agent region comprises indicia of tasks allocated to the at least one assist agent, wherein the user region comprises indicia of tasks allocated to the at least one user, and wherein the at least one assist agent performs at least one of the tasks allocated to the at least one assist agent.

2. The processing system of claim 1, wherein the input causes the autonomy management engine to reallocate a selected task from the at least one user to the at least one assist agent, and wherein the agent region and the user region are updated to comprise indicia of the selected task.

3. The processing system of claim 1 or 2, wherein the input causes the autonomy management engine to reallocate a selected task from the at least one user to another user, and wherein the agent region and the user region are updated to comprise indicia of the selected task.

4. The processing system of one of claims 1-3, wherein the input causes the autonomy management engine to reallocate a selected task from the at least one assist agent to the at least one user, and wherein the agent region and the user region are updated to comprise indicia of the selected task.

5. The processing system of one of claims 1-4, wherein the mission is a flight mission and wherein the processing system is located on an aircraft.

6. The processing system of one of claims 1-5, wherein the indicia are colors.

7. The processing system of one of claims 1-6, wherein the indicia are shapes.

8. The processing system of one of claims 1-7, wherein the assist agent is an autopilot system.

9. A computer-implemented method for task sharing and scheduling, the method comprising:
receiving, by a processing device, a plurality of tasks from an autonomy management engine, wherein each of the plurality of tasks is assigned to one of an assist agent, a first crew member, and a second crew member;
displaying, on a first display and on a second display, a task sharing and scheduling interface to the first crew member and to the second crew member respectively, wherein the interface comprises an agent region, a first user region, and a second user region, wherein the agent region comprises indicia of tasks allocated to the at least one assist agent, wherein the first user region comprises indicia of tasks allocated to the first crew member, and wherein the second user region comprises indicia of tasks allocated to the second crew member; and
performing, by the assist agent, at least one task allocated to the assist agent.

10. The computer-implemented method of claim 9, further comprising:
receiving, by the processing device, a change to at least one of the plurality of tasks from the first crew member via one of the first display and the second display; and
displaying, on the first display and on the second display, the plurality of tasks, including the change to the at least one of the plurality of tasks, to the first crew member and to the second crew member respectively.

11. The computer-implemented method of claim 10, wherein the change to the at least one of the plurality of task comprises an assignment change from one of the first crew member and the second crew member to the assist agent.

12. The computer-implemented method of claim 11, wherein the change to the at least one of the plurality of task comprises a changed task, optionally the method further comprising:
performing, by the assist agent, the changed task.

13. The computer-implemented method of one of claims 9-12, wherein the assist agent is an automatic pilot system.

14. The computer-implemented method of one of claims 10-13, wherein the change to the at least one of the plurality of task comprises a changed task, the method further comprising:
transmitting, by the processing device, the changed task to the assist agent; and
performing, by the assist agent, the changed task.

15. The computer-implemented method of one of claims 9-14, further comprising:
receiving, by the processing device, feedback from the assist agent upon completion of the performing the at least one task allocated to the assist agent.
